Europäisches Patentamt

European Patent Office

Office européen des brevets

(11) Publication number: **0 620 667 A1**

## EUROPEAN PATENT APPLICATION

(21) Application number: 94105275.5

(51) Int. Cl.⁵: **H04L 27/20**

(22) Date of filing: 05.04.94

(30) Priority: 05.04.93 JP 77855/93

(43) Date of publication of application:
**19.10.94 Bulletin 94/42**

(84) Designated Contracting States:
**DE FR GB NL**

(71) Applicant: **MATSUSHITA ELECTRIC
INDUSTRIAL CO., LTD.
1006, Oaza Kadoma
Kadoma-shi, Osaka-fu, 571 (JP)**

(72) Inventor: **Kimura, Tomohiro
30-1-708, Minamikibogaoka
Kawachinagano-shi, Osaka-fu 580 (JP)**
Inventor: **Urabe, Yoshio
1-10-16, Fujinosato
Ibaraki-shi, Osaka-fu 567 (JP)**

(74) Representative: **Eisenführ, Speiser & Partner
Martinistrasse 24
D-28195 Bremen (DE)**

(54) **Pi/4 shift OPSK modulator.**

(57) A π/4 shift QPSK modulator has a phase operator for receiving first and second input data at a predetermined symbol cycle, and for producing a first pair of output data after every even number symbol cycle and producing a second pair of output data after every odd number symbol cycle. The first and second pairs of output data are applied to four digital filters. A selector sequentially selects and produces the four filtered digital data. An invertor inverts the polarity of the filtered digital data after every four filtered digital data from the selector.

Fig.2

## BACKGROUND OF THE INVENTION

### 1. Field of the invention

The present invention relates to a digital filter for band limiting a $\pi/4$ shift QPSK modulation signal used in digital communications devices used, for example, in cellular communications systems.

### 2. Description of the prior art

Band limiting using digital filters is widely used in digital phase modulation methods, including $\pi/4$ shift QPSK modulation. Digital phase modulation requires band limiting of the modulation signal to prevent interference with adjacent channels, and to prevent inter-symbol interference at the symbol decision timing. For example, band limiting of the modulation signal using a roll-off characteristic filter may be required. Digital filters are generally used for these applications because it is difficult to achieve sufficiently precise filtering characteristics in an analog circuit.

In this application, all response outputs of the filter must be precalculated for all input data strings and stored to a memory device in the digital filter providing band limiting of the $\pi/4$ shift QPSK modulation signal. The memory device is then referenced using the data string to be transmitted to obtain the filter output signal.

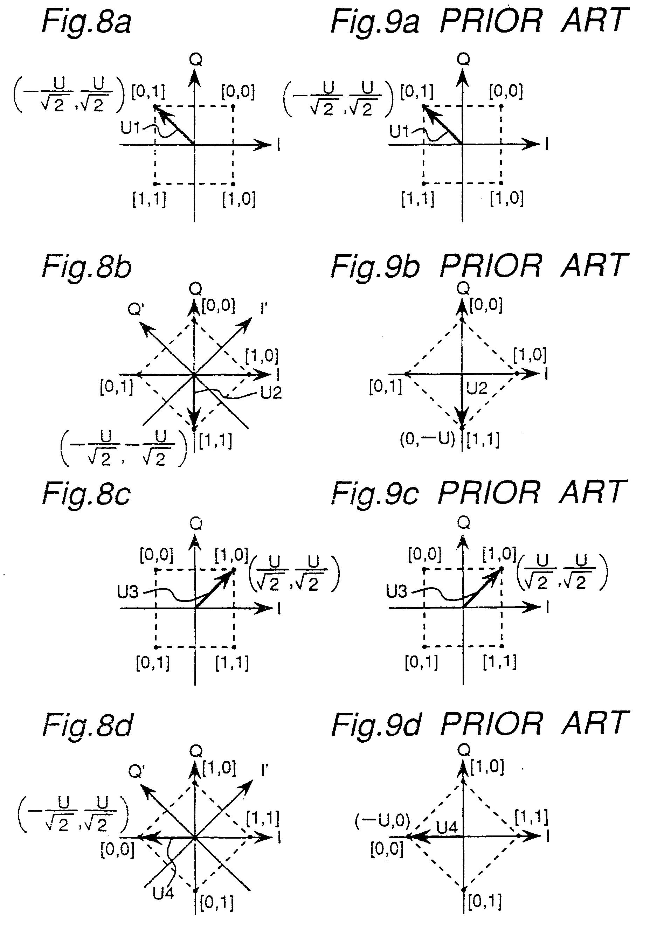

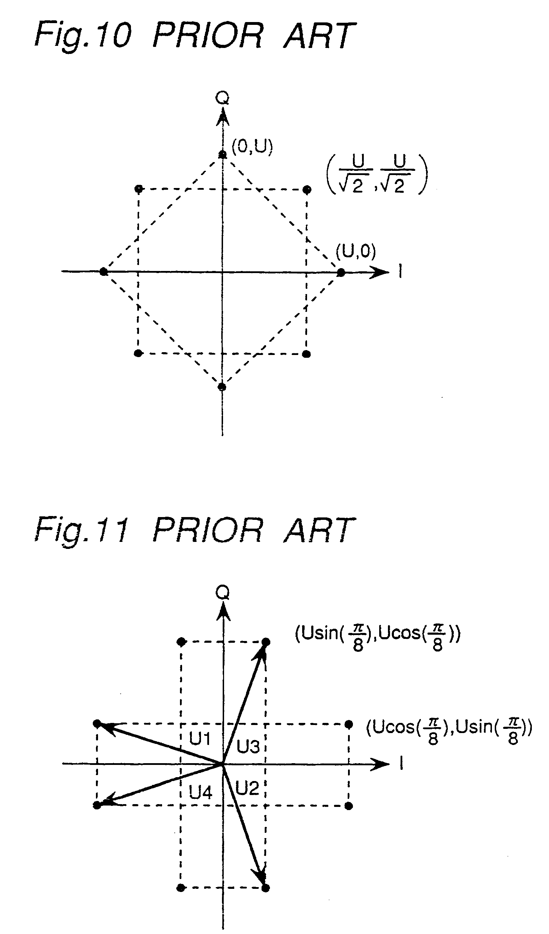

The $\pi/4$ shift QPSK modulation process is described below with reference to Figs. 9a-9d and 10-14. Figs. 9a-9d shows the position of the signal points in QPSK modulation. QPSK modulation can simultaneously transmit two bits of data by means of signal points in four phases. For example, in Fig. 9a, the signal point at the first quadrant (top right) represents two bit combination of [0,0], the second quadrant (top left) represents two bit combination of [0,1], the third quadrant (bottom left) represents two bit combination of [1,1], and the fourth quadrant (bottom right) represents two bit combination of [1,0]. The four signal points [0,0], [0,1], [1,1] and [1,0] in Fig. 9a can be expressed by four vectors $(u/\sqrt{2}, u/\sqrt{2})$, $(-u/\sqrt{2}, u/\sqrt{2})$, $(-u/\sqrt{2}, -u/\sqrt{2})$ and $(u/\sqrt{2}, -u/\sqrt{2})$, respectively, in which u is a length of the vector. Each combination of two data bits that can be simultaneously transmitted is referred to below as a "symbol". $\pi/4$ shift QPSK modulation is obtained by rotating the phase of the QPSK modulation signal points $\pi/4$ each symbol. Thus, the four signal points connected by the square dotted line rotates $\pi/4$ and change their positions after each symbol cycle, as shown in Figs. 9a-9d. In other words, the $\pi/4$ shift QPSK modulator must execute modulation with the signal points positioned in eight phases as shown in Fig. 10. To express the eight points on the plane of I and Q axis shown in Fig. 10, five different values $(0, \pm u/\sqrt{2}, \pm u)$ are necessary. Fig. 11 shows the signal point constellation in another $\pi/4$ Shift QPSK modulation process. The eight signal points shown in Fig. 11 are obtained by $\pi/8$ rotation from that shown in Fig. 10. To express the eight signal points on the plane of I and Q axis shown in Fig. 11, four different values $(\pm u \cdot \sin(\pi/8), \pm u \cdot \cos(\pi/8))$ are necessary.

A conventional $\pi/4$ shift QPSK modulator employing the signal point constellation of Fig. 11 is described below with reference to the figures.

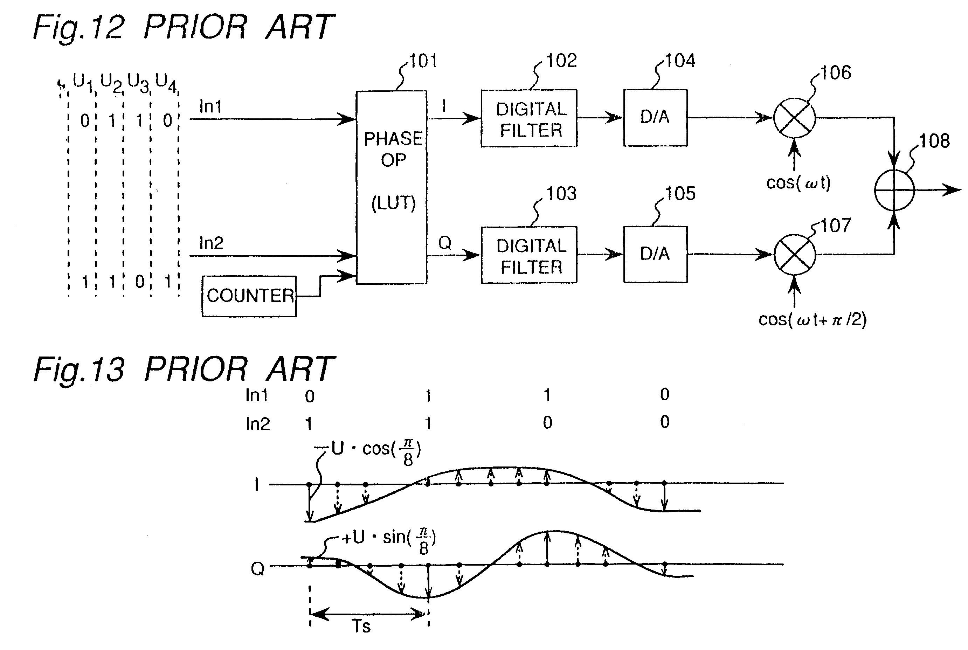

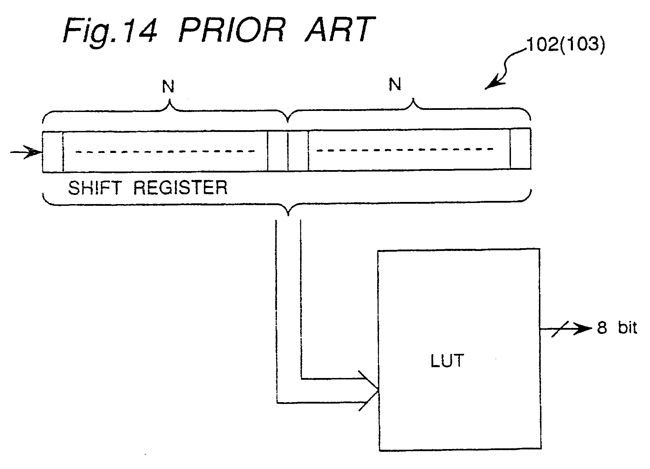

Fig. 12 is a block diagram of a conventional $\pi/4$ shift QPSK modulator. In this modulator, the phase operator 101 obtains one signal point to be transmitted from the eight signal points shown in Fig. 11 each time one symbol is input, and outputs the I axis data and the Q axis data expressing that signal point. For example, it is assumed that symbols u1 [0,1], u2 [1,1], u3 [1,0] and u4 [0,1], in which the brackets show two bit data, are applied to the phase operator 101 in said order. As shown in Fig. 11, the four symbols u1, u2, u3 and u4 on the I-Q plane in Fig. 11 can be given as follows: $u1(-u \cdot \cos(\pi/8), u \cdot \sin(\pi/8))$, $u2(u \cdot \sin(\pi/8), -u \cdot \cos(\pi/8))$, $u3(u \cdot \sin(\pi/8), u \cdot \cos(\pi/8))$ and $u4(-u \cdot \cos(\pi/8), -u \cdot \sin(\pi/8))$. Thus, the phase operator 101 produces from I and Q outputs the above data in said order, after each symbol cycle Ts, as diagrammatically shown in Fig. 14.

The I axis data is input to digital filter 102, and the Q axis data is input to digital filter 103; each of these filters band limits the respective phase axis data, and outputs the resulting wave data. D/A converters 104 and 105 convert the wave data output from digital filters 102 and 103, respectively, to analog signals. Multipliers 106 and 107 multiply the signals output from the D/A converters 104 and 105 by carrier waves, where the phase of these two carrier waves differ by $\pi/2$ to each other. Adder 108 then adds the outputs from multipliers 106 and 107 to obtain the $\pi/4$ shift QPSK modulation signal.

As shown in Fig. 14, the digital filter 102 comprises a shift register 111 and wave form memory 112 which is formed by a look-up table. The shift register 111 receives and stores a predetermined number 2N (where N is a natural number) of I axis data from the I output of the phase operator 101. Here, the predetermined number N is equal to a number of phase axis data produced during a fixed period To. In other words, in order to properly evaluate the present I axis data, it is necessary to investigate a number of I axis data that has been produced during the past To period and those will be produced during the future To period. In the past To period, N I axis data are produced, and in the future To period, N I axis data will be produced. Thus, during the past To period and the future To period taken together, 2N I axis data are produced. Thus, 2N I axis data are simultaneously applied to the look-up table 112. Using 2N I axis data, the digital filter 102 sequentially produces corrected or filtered 2N I axis data and interpolated data inserted during each symbol cycle period Ts. In Fig. 13, the I axis data produced at the symbol cycle is shown by solid line arrows and the interpolated data inserted in the cycle period is shown by dotted arrows. Since one I axis datum takes one of four different values, $(\pm u \cdot \sin(\pi/8), \pm u \cdot \cos(\pi/8))$ the wave form memory 112 must store $4^{2N}$ wave forms. The four different values are expressed by using two bit data. Thus, the output I, as well as output Q, is formed by a dual line capable of carrying two bit data. If K-times oversampling (the number of wave form data per symbol including the interpolation) is used, then the wave form memory 112 must store $K * 4^{2N}$ samples of wave data.

For example, when a given signal influences five symbols before and after that signal due to signal band limiting, and 8-times oversampling is used, i.e., when $N = 5$ and $K = 8$, the wave form memory 112 must store $8 * 4^{2*5} = 8,388,608$ samples of wave data. As a result, the wave form memory 112 must use a high capacity storage device.

SUMMARY OF THE INVENTION

Therefore, an object of the present invention is to provide a $\pi/4$ shift QPSK modulator that reduces the required storage capacity of the wave form memory used in the digital filter, and can be achieved in a small-scale circuit device.

To achieve this object, a $\pi/4$ shift QPSK modulator according to the present invention comprises: a phase operator for receiving first and second input data at a predetermined symbol cycle, and for producing first and second output data after every even number symbol cycle and producing third and fourth output data after every odd number symbol cycle; first, second, third and fourth digital filters for receiving and band limiting said first, second, third and fourth output data, respectively, and for producing first, second, third and fourth filtered digital data; first, second, third and fourth D/A converters for converting said first, second, third and fourth filtered digital data to first, second, third and fourth analog signals, respectively; first, second, third and fourth multipliers for multiplying said first, second, third and fourth analog signals, respectively, with first, second, third and fourth carrier waves having different phase and for producing first, second, third and fourth modulated signals; and an adder for adding said first, second, third and fourth modulated signals and for producing a modulation signal.

According to another preferred embodiment of the present invention, a $\pi/4$ shift QPSK modulator comprises: a phase operator for receiving first and second input data at a predetermined symbol cycle, and for producing first and second output data after every even number symbol cycle and producing third and fourth output data after every odd number symbol cycle; first, second, third and fourth digital filters for receiving and band limiting said first, second, third and fourth output data, respectively, and for producing first, second, third and fourth filtered digital data; a selector for sequentially selecting and producing said first, second, third and fourth filtered digital data; and an invertor for inverting the polarity of said first, second, third and fourth filtered digital data after every four filtered digital data from said selector.

According to yet another preferred embodiment of the present invention, a $\pi/4$ shift QPSK modulator comprises: a phase operator for receiving first and second input data at a predetermined symbol cycle, and for producing first and second output data after every even number symbol cycle and producing third and fourth output data after every odd number symbol cycle; first, second, third and fourth shift registers each for storing a predetermined number of phase axis data and for producing parallel the stored predetermined number of phase axis data; a selector for sequentially selecting parallel phase axis data from said first, second, third and fourth shift registers and producing said selected parallel phase axis data; a wave form memory for previously storing various patterns of wave form data, said wave form memory selecting one pattern of wave form data in accordance with the received parallel phase axis data from said selector and for producing a selected wave form data; and an invertor for inverting the polarity of said selected wave form data after every four selected wave form data.

In any of the above embodiments, the storage capacity required in the wave form memory can be significantly reduced by reducing the number of phase axis data input from the shift register to the wave form memory when the digital filters comprise a shift register and wave form memory, and a $\pi/4$ shift QPSK modulator requiring a small scale circuit suited to circuit integration can be achieved.

## BRIEF DESCRIPTION OF THE DRAWINGS

The present invention will become more fully understood from the detailed description given below and the accompanying diagrams wherein:

Fig. 1 is a block diagram of a $\pi/4$ shift QPSK modulator according to a first embodiment of the present invention,

Fig. 2 is a block diagram of a $\pi/4$ shift QPSK modulator according to a second embodiment of the present invention,

Fig. 3a is a block diagram of the digital filter used in a $\pi/4$ shift QPSK modulator according to the first and second embodiments,

Fig. 3b is a block diagram of an alternative configuration of the digital filter used in a $\pi/4$ shift QPSK modulator according to the first and second embodiments of the invention,

Fig. 4 shows signals produced from the phase operator and digital filters according to the present invention,

Fig. 5 is a block diagram showing a modification of the $\pi/4$ shift QPSK modulator of the second embodiment,

Fig. 6 is a block diagram of a $\pi/4$ shift QPSK modulator according to a third embodiment of the present invention,

Fig. 7 is a block diagram showing a modification of the $\pi/4$ shift QPSK modulator of the third embodiment,

Figs. 8a-8d are graphs showing signal point constellations of $\pi/4$ shift QPSK modulation according to the present invention,

Figs. 9a-9d are graphs showing signal point constellations of $\pi/4$ shift QPSK modulation according to the prior art,

Fig. 10 is a signal point constellation showing the modulation diagram of QPSK modulation of the prior art,

Fig. 11 is a signal point constellation showing another modulation diagram in $\pi/4$ shift QPSK modulation of the prior art,

Fig. 12 is a block diagram of a conventional $\pi/4$ shift QPSK modulator,

Fig. 13 shows signals produced from the phase operator and digital filters according to the prior art, and

Fig. 14 is a block diagram of a digital filter used in the conventional $\pi/4$ shift QPSK modulator.

## DESCRIPTION OF PREFERRED EMBODIMENTS

The first embodiment of a $\pi/4$ shift QPSK modulator according to the invention is described below with reference to the accompanying figures.

According to the present invention, $\pi/4$ shift QPSK modulation is achieved by rotating the phase of the QPSK modulation signal points shown in Fig. 8a, $\pi/4$ after each symbol cycle, thus alternating the signal point positions, such as shown in Figs. 8a-8d. QPSK modulation can simultaneously transmit two bits of data by means of signal points in four phases.

For example, in the first symbol cycle as shown in Fig. 8a, the signal point at the first quadrant (top right) represents two bit combination of [0,0], the second quadrant (top left) represents two bit combination of [0,1], the third quadrant (bottom left) represents two bit combination of [1,1], and the fourth quadrant (bottom right) represents two bit combination of [1,0]. The four signal points [0,0], [0,1], [1,1] and [1,0] in Fig. 8a can be expressed by four vectors $(u/\sqrt{2}, u/\sqrt{2})$, $(-u/\sqrt{2}, u/\sqrt{2})$, $(-u/\sqrt{2}, -u/\sqrt{2})$ and $(u/\sqrt{2}, -u/\sqrt{2})$, respectively, in which u is a length of the vector.

Then, in the second symbol cycle as shown in Fig. 8b, the four signal points are rotated $\pi/4$ counterclockwise from those shown in Fig. 8a, and these four signal points represent two bit combinations of [0,0], [0,1], [1,1] and [1,0]. When the four signal points fall on the I axis or Q axis, such as shown in Fig. 8b, the four signal points are expressed, not by the I-Q plane, but by an I'-Q' plane which is rotated $\pi/4$ counterclockwise from the I-Q plane. Thus, in Fig. 8b, the four signal point [0,0], [0,1], [1,1] and [1,0] can be expressed by four vectors $(u/\sqrt{2}, u/\sqrt{2})$, $(-u/\sqrt{2}, u/\sqrt{2})$, $(-u/\sqrt{2}, -u/\sqrt{2})$ and $(u/\sqrt{2}, -u/\sqrt{2})$, respectively.

Then, in the third symbol cycle as shown in Fig. 8c, the four signal points are further rotated $\pi/4$ counterclockwise from those shown in Fig. 8b, and these four signal points represent two bit combinations of [0,0], [0,1], [1,1] and [1,0]. In this case, since the four signal points do not fall on the I axis or Q axis, the four signal points are expressed by the I-Q plane. Thus, in Fig. 8c, the four signal point [0,0], [0,1], [1,1] and [1,0] can be expressed by four vectors $(-u/\sqrt{2}, u/\sqrt{2})$, $(-u/\sqrt{2}, -u/\sqrt{2})$, $(u/\sqrt{2}, -u/\sqrt{2})$ and $(u/\sqrt{2}, u/\sqrt{2})$, respectively.

4

Next, in the fourth symbol cycle as shown in Fig. 8d, the four signal points are still further rotated $\pi/4$ counterclockwise from those shown in Fig. 8c, and these four signal points represent two bit combinations of [0,0], [0,1], [1,1] and [1,0]. Since the four signal points fall on the I axis or Q axis, the four signal points are expressed, not by the I-Q plane, but by the I'-Q' plane. Thus, in Fig. 8d, the four signal point [0,0], [0,1], [1,1] and [1,0] can be expressed by four vectors $(-u/\sqrt{2}, u/\sqrt{2})$, $(-u/\sqrt{2}, -u/\sqrt{2})$, $(u/\sqrt{2}, -u/\sqrt{2})$ and $(u/\sqrt{2}, u/\sqrt{2})$, respectively.

In this manner, the eighth symbol cycle will be the same as the first symbol cycle.

As apparent from the above, according to the present invention, the four signal points shown in Fig. 8a or 8c are expressed as the components of the two intersecting axes I and Q, i.e., as I axis data and Q axis data, and the four signal points shown in Fig. 8b or 8d are expressed as the components of the two intersecting axes I' and Q', i.e., as I' axis data and Q' axis data. These I, I', Q and Q' axis data are generally referred to as phase axis data. As a result, all the phase axis data can be expressed by using two values $(+u/\sqrt{2}, -u/\sqrt{2})$.

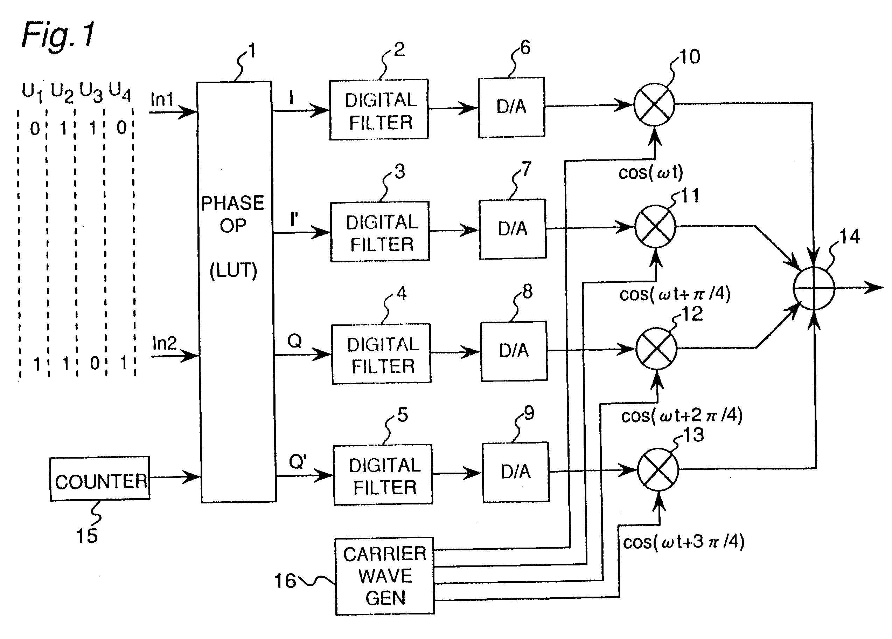

Referring to Fig. 1, a block diagram of a $\pi/4$ shift QPSK modulator according to a first embodiment of the present invention is shown. The $\pi/4$ shift QPSK modulator shown in Fig. 1 has a phase operator 1 for receiving two-bit data through inputs In1 and In2 in response to each symbol cycle clock produced from counter 15 and for producing I and Q axis data or I' and Q' axis data after each symbol cycle. The phase operator 1 can be formed by a look-up table, as shown in Table 1 below.

Table 1

| INPUT | | | OUTPUT | | | |
|---|---|---|---|---|---|---|
| COUNTER | In1 | In2 | I | Q | I' | Q' |
| 0 | 0 | 0 | 1 | 1 | - | - |
|  | 0 | 1 | 0 | 1 | - | - |
|  | 1 | 0 | 1 | 0 | - | - |
|  | 1 | 1 | 0 | 0 | - | - |
| 1 | 0 | 0 | - | - | 1 | 1 |
|  | 0 | 1 | - | - | 0 | 1 |
|  | 1 | 0 | - | - | 1 | 0 |
|  | 1 | 1 | - | - | 0 | 0 |
| 2 | 0 | 0 | 0 | 1 | - | - |
|  | 0 | 1 | 0 | 0 | - | - |
|  | 1 | 0 | 1 | 1 | - | - |
|  | 1 | 1 | 1 | 0 | - | - |
| 3 | 0 | 0 | - | - | 0 | 1 |
|  | 0 | 1 | - | - | 0 | 0 |
|  | 1 | 0 | - | - | 1 | 1 |
|  | 1 | 1 | - | - | 1 | 0 |
| 4 | 0 | 0 | 0 | 0 | - | - |
|  | 0 | 1 | 1 | 0 | - | - |
|  | 1 | 0 | 0 | 1 | - | - |
|  | 1 | 1 | 1 | 1 | - | - |
| 5 | 0 | 0 | - | - | 0 | 0 |
|  | 0 | 1 | - | - | 1 | 0 |
|  | 1 | 0 | - | - | 0 | 1 |
|  | 1 | 1 | - | - | 1 | 1 |
| 6 | 0 | 0 | 1 | 0 | - | - |
|  | 0 | 1 | 1 | 1 | - | - |
|  | 1 | 0 | 0 | 0 | - | - |
|  | 1 | 1 | 0 | 1 | - | - |
| 7 | 0 | 0 | - | - | 1 | 0 |
|  | 0 | 1 | - | - | 1 | 1 |
|  | 1 | 0 | - | - | 0 | 0 |
|  | 1 | 1 | - | - | 0 | 1 |

In Table 1, under columns I, Q, I' and Q', logic "1" and logic "0" represent $+u/\sqrt{2}$ and $-u/\sqrt{2}$, respectively. Counter 15 repeatedly counts from 0 to 7. When counter 15 produces "0", one pair of I and Q outputs is produced corresponding to one pair input of In1 and In2. Similarly, when counter produces "1", one pair of I' and Q' outputs is produced corresponding to one pair input of In1 and In2. This is repeated each time counter 15 counts up.

Digital filters 2, 3, 4, and 5 are provided for receiving I axis data, I' axis data, Q axis data, and Q' axis data from the phase operator 1, and for producing the band-limited wave form data of the I axis data, I' axis data, Q axis data, and Q' axis data, respectively.

D/A converters 6, 7, 8, and 9 are provided for converting the wave form data output from the digital filters 2, 3, 4, and 5, respectively, to analog signals.

Multipliers 10, 11, 12, and 13 are provided for multiplying the analog signal waves output from the D/A converters 6, 7, 8, and 9, respectively, by discrete and different carrier waves from a carrier wave generator 16. The carrier waves from the carrier wave generator 16 are shifted $\pi/4$ phase. An adder 14 then adds the outputs of the multipliers 10, 11, 12, and 13 to obtain the $\pi/4$ shift QPSK modulation signal.

As shown in Fig. 1, it is assumed that four symbols u1 [0,1], u2 [1,1], u3 [1,0] and u4 [0,1] are applied to the phase operator 1 in said order. In response to the first symbol u1 [0,1], the phase operator 1

produces $-u/\sqrt{2}$ from output I as I axis data and $u/\sqrt{2}$ from output Q as Q axis data. Then, in response to the second symbol u2 [1,1], the phase operator 1 produces $-u/\sqrt{2}$ from output I' as I' axis data and $-u/\sqrt{2}$ from output Q' as Q' axis data. Then, in response to the third symbol u3 [1,0], the phase operator 1 produces $u/\sqrt{2}$ from output I as I axis data and $u/\sqrt{2}$ from output Q as Q axis data. Next, in response to the fourth symbol u4 [0,0], the phase operator 1 produces $-u/\sqrt{2}$ from output I' as I' axis data and $u/\sqrt{2}$ from output Q' as Q' axis data.

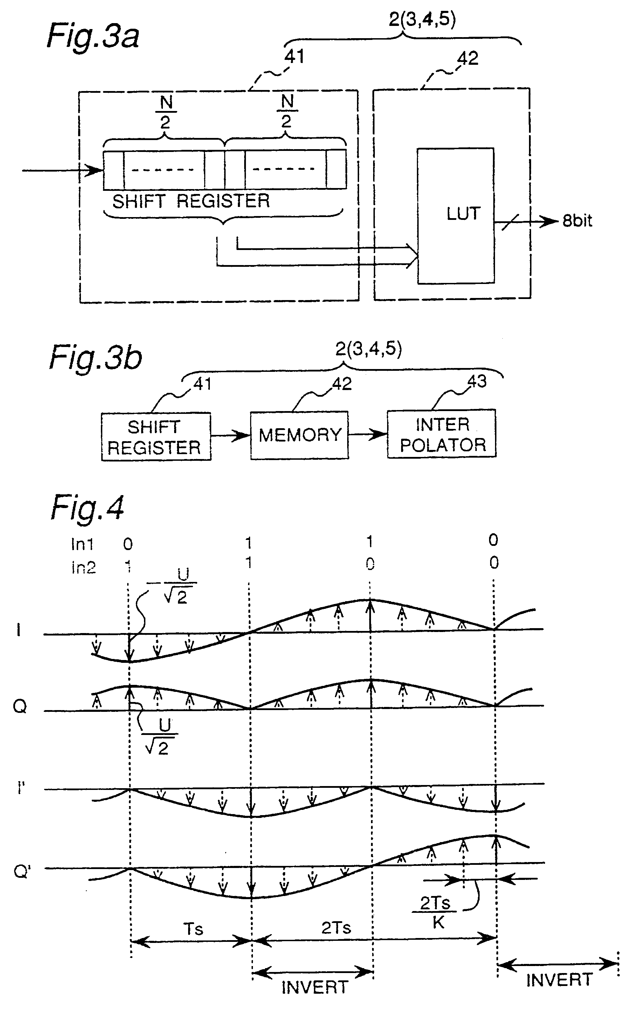

The data produced from outputs I, Q, I' and Q' in response to four symbols u1, u2, u3 and u4 are shown in Fig. 4. As apparent from Fig. 4, since outputs I and Q produce data in response to symbols u1 and u3, and outputs I' and Q' produce data in response to symbols u2 and u4, the data produced from each of the outputs I, Q, I' and Q' takes an interval of two symbol periods 2Ts.

Referring to Fig. 3a, a detail of the digital filter 2 is shown. The digital filter 2 has a shift register 41 for storing N I axis data and a wave form memory 42 for producing appropriate signal pattern in response to the input N I axis data. The wave form memory 42 is formed by a look-up table. The shift register 41 receives and stores a predetermined number N (where N is a natural number) of I axis data from the I output of the phase operator 1. Here, the predetermined number N/2 is equal to a number of phase axis data produced during a fixed period To. In other words, in order to properly evaluate the present I axis data, it is necessary to investigate a number of I axis data that has been produced during the past To period and those will be produced during the future To period. In the past To period, N/2 I axis data are produced, and in the future To period, N/2 I axis data will be produced. Thus, during the past To period and the future To period taken together, N I axes data are produced. Thus, N I axis data are simultaneously applied to the look-up table 42. Using N I axis data, the digital filter 2 sequentially produces corrected or filtered N I axis data and interpolated data inserted during each two symbol cycle period 2Ts. In Fig. 4, the I axis data produced at the symbol cycle is shown by solid line arrows and the interpolated data inserted in the cycle period is shown by dotted arrows. Thus, wave form memory 42 produces data after each sampling period 2Ts/K, as shown in Fig. 4. Since one I axis datum takes one of two different values, $\pm u/\sqrt{2}$, the wave form memory 42 must store $2^N$ wave forms. The two different values are expressed by HIGH and LOW level signals using one bit data. Thus, the output I, as well as other outputs Q, I' and Q', can be formed by a single line capable of carrying one bit data. If K-times oversampling (the number of wave form data per symbol including the interpolation) is used, then the wave form memory 42 must store $K * 2^N$ samples of wave data.

For example, when a given signal influences two and a half symbols before and after that signal, due to signal band limiting, and 8-times oversampling is used, i.e., when $N/2 = 2 + \frac{1}{2}$ and $K = 8$, the wave form memory 112 must store $8 * 2^5 = 256$ samples of wave data. As a result, the wave form memory 42 can be formed by a very small size memory. Note that other digital filters 3, 4 and 5 have the same structure as the digital filter 2 described above.

Fig. 3b shows a modification of the digital filter 2. The digital filter 2 shown in Fig. 3b has, in addition to shift register 41 and wave form memory 42, an interpolator 43 which interpolates the wave form data in a shorter cycle than the wave form data output cycle of the wave form memory 42. The interpolator 43 interpolates a number of data in each sampling period 2Ts/K. By shortening the cycle in which the wave form data is output, the interpolator 43 makes it possible to increase the sampling rate without increasing the number of wave form data samples that must be stored in the wave form memory 42.

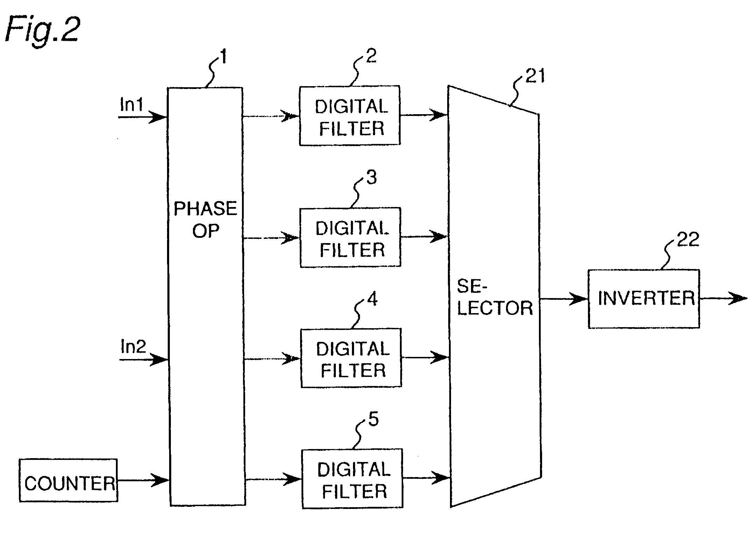

Referring to Fig. 2, a second embodiment of a $\pi/4$ shift QPSK modulator according to the invention is described. Instead of D/A converters 6-9, multipliers 10-13 and adder 14, the second embodiment has a selector 21 for receiving outputs from the digital filters 2-5 and an invertor 22 for receiving a selected signal. The selector 21 sequentially selects the wave form data output from the digital filters 2, 3, 4, and 5, and the invertor 22 inverts the polarity of the wave form data each time the selector 21 selects and outputs one complete cycle of wave form data. The inversion is carried out at every four wave form data output cycles from the selector 21, as indicated in Fig. 4. The invertor is disclosed in detail in U.S. Patent No. 4,756,008 issued July 5, 1988 to Yagi et al., which is herein incorporated by reference. The invertor disclosed in U.S. Patent No. 4,756,008 inverts the data every other two waveform data cycles. Because the wave form data output from the digital filters 2, 3, 4, and 5 is selected once every four samples by the selector 21 and the polarity is inverted by the invertor 22, the resulting signals are multiplied with a carrier wave with a frequency 1/8 the sampling frequency $f_s$. In addition, because the timing at which the selector 21 selects the wave form data output from the digital filters 2, 3, 4, and 5 is offset one sample each operation, the phase of the multiplied carrier wave is also offset 1/8 cycle each following the sequence of selector 21 operation, i.e., the phase is delayed $\pi/4$. Thus, by the selector 21 sequentially selecting the wave form data output from the digital filters 2, 3, 4, and 5 and the invertor 22 inverting the wave form data polarity after each complete wave form data selection cycle, a $\pi/4$ shift QPSK modulation signal is obtained by effectively modulating the wave form data output from each of the digital filters 2, 3, 4, and 5 by a carrier wave of which the phase is shifted $\pi/4$ at each digital filter output.

In addition, with a $\pi/4$ shift QPSK modulator thus constructed, the $\pi/4$ shift QPSK modulation signal can also be obtained by modulation with carrier waves of frequencies $(n + 1/8)f_s$, $(n + 3/8)f_s$, $(n + 5/8)f_s$, and $(n + 7/8)f_s$ (where n is an integer value) in addition to the frequency 1/8 the sampling frequency $f_s$. Sequenced to signal selection by the selector 21, however, the phase of the multiplied carrier wave will be delayed $\pi/4$ at the $(n + 1/8)f_s$ frequency, $3\pi/4$ at the $(n + 3/8)f_s$ frequency, $5\pi/4$ at the $(n + 5/8)f_s$ frequency, and $7\pi/4$ at the $(n + 7/8)f_s$ frequency.

As in the first embodiment described above, the digital filters 2, 3, 4, and 5 may be constructed as shown in Fig. 3 or Fig. 4. Note, however, that because the digital filters 2, 3, 4, and 5 only need to output the wave form data when the corresponding digital filter output is selected by the selector 21, the number of samples of wave form data that must be stored by the wave form memory 42 is 1/4.

Because the phase axis data is input to the digital filters once for every two symbols in this embodiment, if a given signal affects N symbols (where N is a natural number) before and after that signal due to band limiting for transmission of that signal, the number of phase axes data input from the shift register 41 to the wave form memory 42 (Fig. 3) is N. Because each phase axis data is expressed by two values, the number of wave forms that must be stored in the wave form memory 42 is $2^N$. In addition, if K-times oversampling is used, then the wave form memory 42 must store $(K/4) * 2^N$ samples of wave data.

For example, if a given signal influences five symbols inclusive of those before and after the present signal due to signal band limiting, and 8-times oversampling is used, the wave form memory 42 must only have sufficient capacity to store $(8/4) * 2^5 = 64$ samples of wave data.

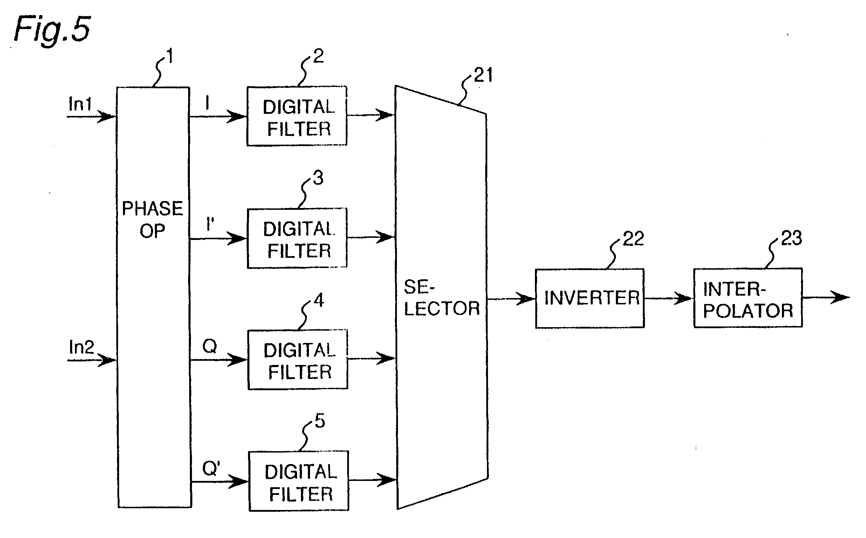

Note that the $\pi/4$ shift QPSK modulator of this embodiment may also be structured as shown in Fig. 5. What differs from the configuration shown in Fig. 2 is the addition of an interpolator 23 for interpolating the wave form data in a shorter cycle than the wave form data output cycle of the invertor 22. By shortening the cycle in which the wave form data is output, the interpolator 23 makes it possible to increase the sampling rate without increasing the number of wave form data samples that must be stored in the wave form memories 42. If the sampling frequency before interpolation is $f_s$, the carrier wave frequency of the modulation signal passed during wave form data interpolation by the interpolator 23 may be $(n + 1/8)f_s$, $(n + 3/8)f_s$, $(n + 5/8)f_s$, or $(n + 7/8)f_s$.

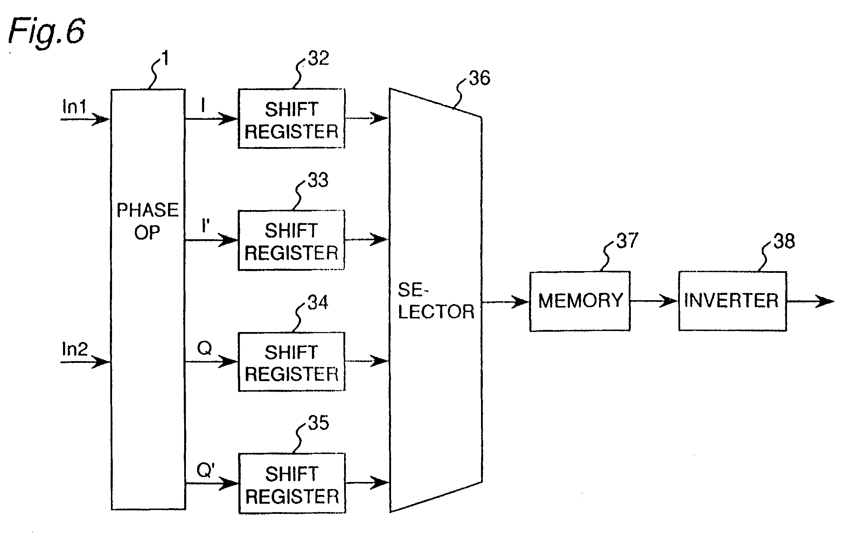

Referring to Fig. 6, a third embodiment of a $\pi/4$ shift QPSK modulator according to the invention is described. The third embodiment differs from the second embodiment in that each of the digital filters 2-5 is separated to a shift register and a memory in a manner shown in Fig. 3a, and that the separated shift registers 32, 33, 34 and 35 are provided before the selector 36 and one memory 37, used in common for four shift registers, is provided after the selector 36. In this manner, it is not necessary to provide a memory for each of the four shift registers.

The memory size of memory 37 for the third embodiment is four times the size of memory 42 used in the second embodiment shown in Fig. 2. For example, if a given signal influences five symbols before and after that signal due to signal band limiting, and 8-times oversampling is used, the wave form memory 37 must only have sufficient capacity to store $8 * 2^5 = 256$ samples of wave data.

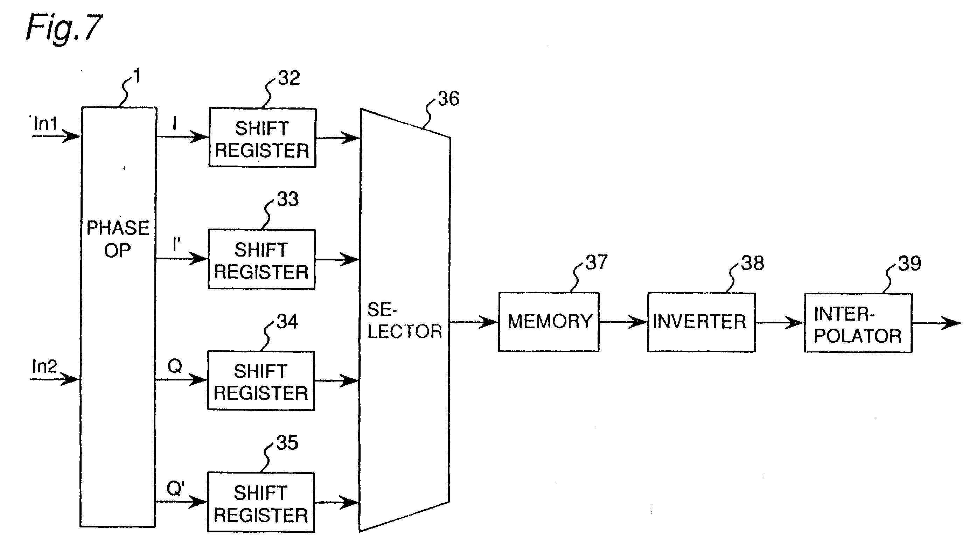

Referring to Fig. 7 a modification of the third embodiment is shown. In the modification shown in Fig. 7, what differs from the configuration shown in Fig. 6 is the addition of an interpolator 39 for interpolating the wave form data in a shorter cycle than the wave form data output cycle of the invertor 38. The interpolator 39 is the same as the interpolator 23 described above in connection with Fig. 5.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A $\pi/4$ shift QPSK modulator comprising:
   a phase operator for receiving first and second input data at a predetermined symbol cycle, and for producing first and second output data after every even number symbol cycle and producing third and fourth output data after every odd number symbol cycle;
   first, second, third and fourth digital filters for receiving and band limiting said first, second, third and fourth output data, respectively, and for producing first, second, third and fourth filtered digital data;
   first, second, third and fourth D/A converters for converting said first, second, third and fourth filtered digital data to first, second, third and fourth analog signals, respectively;

first, second, third and fourth multipliers for multiplying said first, second, third and fourth analog signals, respectively, with first, second, third and fourth carrier waves having different phase and for producing first, second, third and fourth modulated signals; and

an adder for adding said first, second, third and fourth modulated signals and for producing a modulation signal.

2. A $\pi/4$ shift QPSK modulator according to Claim 1, wherein each of said first, second, third and fourth digital filters comprises: a shift register for storing a predetermined number of phase axis data, and for producing parallel the stored predetermined number of phase axis data; and a wave form memory for previously storing various patterns of wave form data, said wave form memory selecting one pattern of wave form data in accordance with the received parallel phase axis data from said shift register and for producing a selected wave form data.

3. A $\pi/4$ shift QPSK modulator according to Claim 2, wherein each of said first, second, third and fourth digital filters further comprises an interpolator for interpolating wave form data in a shorter cycle than a cycle for producing wave form data from said wave form memory.

4. A $\pi/4$ shift QPSK modulator comprising:

a phase operator for receiving first and second input data at a predetermined symbol cycle, and for producing first and second output data after every even number symbol cycle and producing third and fourth output data after every odd number symbol cycle;

first, second, third and fourth digital filters for receiving and band limiting said first, second, third and fourth output data, respectively, and for producing first, second, third and fourth filtered digital data;

a selector for sequentially selecting and producing said first, second, third and fourth filtered digital data; and

an invertor for inverting the polarity of said first, second, third and fourth filtered digital data after every four filtered digital data from said selector.

5. A $\pi/4$ shift QPSK modulator according to Claim 4, wherein each of said first, second, third and fourth digital filters comprises: a shift register for storing a predetermined number of phase axis data, and for producing parallel the stored predetermined number of phase axis data; and a wave form memory for previously storing various patterns of wave form data, said wave form memory selecting one pattern of wave form data in accordance with the received parallel phase axis data from said shift register and for producing a selected wave form data.

6. A $\pi/4$ shift QPSK modulator according to Claim 5, wherein each of said first, second, third and fourth digital filters further comprises an interpolator for interpolating wave form data in a shorter cycle than a cycle for producing wave form data from said wave form memory.

7. A $\pi/4$ shift QPSK modulator comprising:

a phase operator for receiving first and second input data at a predetermined symbol cycle, and for producing first and second output data after every even number symbol cycle and producing third and fourth output data after every odd number symbol cycle;

first, second, third and fourth shift registers each for storing a predetermined number of phase axis data and for producing parallel the stored predetermined number of phase axis data;

a selector for sequentially selecting parallel phase axis data from said first, second, third and fourth shift registers and producing said selected parallel phase axis data;

a wave form memory for previously storing various patterns of wave form data, said wave form memory selecting one pattern of wave form data in accordance with the received parallel phase axis data from said selector and for producing a selected wave form data; and

an invertor for inverting the polarity of said selected wave form data after every four selected wave form data.

8. A $\pi/4$ shift QPSK modulator according to Claim 7, further comprising an interpolator for interpolating wave form data in a shorter cycle than a cycle for producing wave form data from said wave form memory.

Fig.1

EP 0 620 667 A1

Fig.2

PHASE OP — 1

In1 →
In2 →
COUNTER →

DIGITAL FILTER — 2
DIGITAL FILTER — 3
DIGITAL FILTER — 4
DIGITAL FILTER — 5

SE-LECTOR — 21

INVERTER — 22

EP 0 620 667 A1

## Fig.3a

2(3,4,5)

41    42

N/2    N/2

SHIFT REGISTER

LUT → 8bit

## Fig.3b

2(3,4,5)

41    42    43

SHIFT REGISTER → MEMORY → INTER POLATOR

## Fig.4

In1   0        1        1        0
In2   1        1        0        0

$-\dfrac{U}{\sqrt{2}}$

I

Q

$\dfrac{U}{\sqrt{2}}$

I'

Q'

$\dfrac{2Ts}{K}$

Ts    2Ts

INVERT    INVERT

## Fig.5

Fig.6

# Fig.7

EP 0 620 667 A1

## Fig.8a

$$\left(-\frac{U}{\sqrt{2}},\frac{U}{\sqrt{2}}\right)$$

## Fig.9a PRIOR ART

$$\left(-\frac{U}{\sqrt{2}},\frac{U}{\sqrt{2}}\right)$$

## Fig.8b

$$\left(-\frac{U}{\sqrt{2}},-\frac{U}{\sqrt{2}}\right)$$

## Fig.9b PRIOR ART

$(0,-U)$

## Fig.8c

$$\left(\frac{U}{\sqrt{2}},\frac{U}{\sqrt{2}}\right)$$

## Fig.9c PRIOR ART

$$\left(\frac{U}{\sqrt{2}},\frac{U}{\sqrt{2}}\right)$$

## Fig.8d

$$\left(-\frac{U}{\sqrt{2}},\frac{U}{\sqrt{2}}\right)$$

## Fig.9d PRIOR ART

$(-U,0)$

## Fig.10 PRIOR ART

$(0,U)$

$\left(\dfrac{U}{\sqrt{2}}, \dfrac{U}{\sqrt{2}}\right)$

$(U,0)$

## Fig.11 PRIOR ART

$(U\sin(\frac{\pi}{8}), U\cos(\frac{\pi}{8}))$

$(U\cos(\frac{\pi}{8}), U\sin(\frac{\pi}{8}))$

U1   U3

U4   U2

## Fig.12 PRIOR ART

| U₁ | U₂ | U₃ | U₄ | |
|---|---|---|---|---|
| $U_1$ | $U_2$ | $U_3$ | $U_4$ | |
| 0 | 1 | 1 | 0 | In1 |
| 1 | 1 | 0 | 1 | In2 |

PHASE OP (LUT) — 101

COUNTER

I

Q

DIGITAL FILTER — 102

DIGITAL FILTER — 103

D/A — 104

D/A — 105

106

107

$\cos(\omega t)$

$\cos(\omega t + \pi/2)$

108

## Fig.13 PRIOR ART

In1  0   1   1   0
In2  1   1   0   0

$-U \cdot \cos(\frac{\pi}{8})$

I

$+U \cdot \sin(\frac{\pi}{8})$

Q

Ts

EP 0 620 667 A1

## Fig.14 PRIOR ART

102(103)

SHIFT REGISTER

LUT

8 bit

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 817 116 (YOSHIHIKO AKAIWA ET AL.)<br>* column 6, line 6 - line 29 *<br>* column 7, line 24 - line 26 * | 1 | H04L27/20 |
| Y | * figures 3,4 * | 2-8 | |
| Y | IEEE GLOBAL TELECOMMUNICATIONS CONFERENCE, 1 DECEMBER 1988, HOLLYWOOD, FLORIDA, US, vol.1<br>pages 141 - 147, XP79261<br>KAMISAKA T. ET AL.: 'A DIGITAL MODULATOR VLSI COVERING VARIOUS MODULATION TECHNIQUES AND WIDE RANGE DATA SPEEDS'<br>* paragraph 3; figures 1,2 * | 2-8 | |
| Y,D | US-A-4 756 008 (YAGI ET AL.)<br>* abstract *<br>* column 3, line 18 - line 28 *<br>* figures 2,3,4,7 * | 2-8 | |
| A | IEEE TRANSACTIONS ON COMMUNICATIONS, vol.25, no.10, October 1977<br>pages 1242 - 1244<br>BOUTIN N. ET AL.: 'A DIGITAL FILTER-MODULATION COMBINATION FOR DATA TRANSMISSION'<br>* abstract; figure 1 * | 2,5 | TECHNICAL FIELDS SEARCHED (Int.Cl.5)<br><br>H04L |

The present search report has been drawn up for all claims

| Place of search | Date of completion of the search | Examiner |
|---|---|---|
| THE HAGUE | 24 August 1994 | Ghigliotti, L |

EPO FORM 1503 03.82 (P04C01)